# EUROPÄISCHE PATENTSCHRIFT

(11) **EP 3 438 674 B1**
(45) Veröffentlichungstag und Bekanntmachung des Hinweises auf die Patenterteilung: **22.06.2022**
(21) Anmeldenummer: 17001318.9
(22) Anmeldetag: 01.08.2017
(51) Int. Cl.: G01N 35/10, B01L 3/02, B08B 3/02

(54) **VORRICHTUNG UND VERFAHREN ZUR REINIGUNG VON PIPETTIERNADELN**
METHOD AND DEVICE FOR CLEANING PIPPETING TIPS
PROCÉDÉ ET DISPOSITIF DE NETTOYAGE DES AIGUILLES DE PIPETAGE

(43) Veröffentlichungstag der Anmeldung: 06.02.2019
(73) Patentinhaber: Euroimmun Medizinische Labordiagnostika AG, 23560 Lübeck (DE)
(72) Erfinder: SCHULZE, Tassilo, 02748 Bernstadt (DE); SCHROEDER, Steffen, 23936 Grevesmühlen (DE); ALLERHEILIGEN-STOLZMANN, Steffen, 23562 Lübeck (DE); BUSCHTEZ, Michael, 23560 Lübeck (DE)

(56) Entgegenhaltungen:
- DE-A1- 10 207 499
- JP-A- S62 242 858
- JP-U- S5 741 162
- US-A1- 2012 227 771

## Beschreibung

Die Erfindung betrifft eine Vorrichtung sowie ein Verfahren zum Reinigen wenigstens einer Pipettiernadel sowie eine Verwendung in einem Analysegerät mit einer entsprechend ausgeführten Reinigungsvorrichtung. Eine gattungsgemäße Vorrichtung zum Reinigen wenigstens einer Pipettiernadel verfügt über eine Waschstation, durch die zumindest zeitweise während eines Reinigungsvorgangs eine Innen- und eine Außenseite der Pipettiernadel wenigstens abschnittsweise mit mindestens einer Waschflüssigkeit in Kontakt gebracht wird. Ferner ist wenigstens ein Bewegungsmittel vorgesehen, durch das wenigstens zeitweise vor, nach oder während des Reinigungsvorgangs eine Relativbewegung zwischen der Pipettiernadel und der Waschstation bewirkt wird.

Zur Untersuchung menschlicher oder tierischer Proben sind eine Vielzahl von Automaten bekannt, mit denen automatisiert, Teststreifen oder Gewebeproben unter Einsatz von Pipettiernadeln mit einer Flüssigkeit inkubiert. Bei den Flüssigkeiten die entsprechend dosiert und pipettiert werden müssen, handelt es sich in Abhängigkeit der durchgeführten Analyse um eine menschliche Probe, wie etwa Blut, Urin oder Liquor, oder ein untersuchungsspezifisches Reagenz oder Färbemittel. Um eine Verschleppung von Proben oder Reagenzien zwischen den unterschiedlichen Untersuchungen und Untersuchungsschritten zu verhindern, verfügen derartige Analysegeräte oftmals über Waschstationen, mit denen die wieder verwendbaren Pipettiernadel innen und außen gereinigt werden. Die Pipettiernadeln werden in eine entsprechende Waschflüssigkeit eingetaucht oder mit dieser besprüht und die Waschflüssigkeit nach ein oder mehreren Waschvorgängen ausgetauscht.

Alternativ zu dieser technischen Lösung, bei der die Pipettiernadeln gewaschen und wiederverwendet werden, kommen teilweise Einwegpipetten oder -spritzen zum Einsatz.

Das Dokument US 2012/227771 A1 offenbart eine Vorrichtung zum Reinigen wenigstens einer Pipettiernadel mit einer Waschstation, durch die zumindest zeitweise während eines Reinigungsvorgangs eine Innen- und eine Außenseite der Pipettiernadel wenigstens abschnittsweise mit einer Waschflüssigkeit in Kontakt gebracht wird und mit zumindest einem Bewegungsmittel, durch das wenigstens zeitweise vor, nach oder während des Reinigungsvorgangs eine Relativbewegung zwischen der Pipettiernadel und der Waschstation bewirkt wird, wobei eine Trocknungseinrichtung vorgesehen ist, die zumindest einen während des Reinigungsvorgangs mit Waschflüssigkeit in Kontakt gebrachten Bereich der Pipettiernadel mit wenigstens einem Trockenmittelstrom beaufschlagt.

In diesem Zusammenhang ist aus der aus der EP 1 213 588 A1 eine Vorrichtung zum Reinigen von Pipettiernadeln bekannt, bei der die zu reinigende Pipettiernadel in ein mit Waschflüssigkeit gefülltes Bassin eingetaucht und von außen mit einer Waschflüssigkeit besprüht wird. Die Menge der im Bassin befindlichen Waschflüssigkeit kann hierbei gezielt variiert werden.

Des Weiteren ist aus der US 4,817,443 eine weitere Vorrichtung zur Reinigung von Pipettiernadeln bekannt, bei der die Waschflüssigkeit über einen Einlass in einen die Pipettiernadel umgebenden Hohlraum eingebracht und über einen im unteren Bereich des Hohlraums vorgesehenen Auslass abgesaugt wird. Während der Reinigung der Außenseite einer Pipettiernadel befindet sich die Pipettenspitze in einer geeignet geformten Ausnehmung, sodass der Innenraum der Pipettiernadel gegenüber dem Hohlraum abgedichtet ist.

Eine Reinigung der Innenseite der Pipettiernadel wird bewirkt, indem die Pipettiernadel leicht aus der Ausnehmung abgehoben wird und in einem zweiten Reinigungsschritt Waschflüssigkeit durch die Pipettiernadel gefördert wird. Die aus der Pipettiernadel austretende, verschmutzte Waschflüssigkeit wird ebenfalls über den Auslass abgesaugt wird.

Aus der EP 0 661 542 A2 ist eine weitere Vorrichtung zum Reinigen einer Pipettiernadel mithilfe einer Waschflüssigkeit bekannt. Auch mit der in dieser Druckschrift beschriebenen technischen Lösung wird sowohl die Innen- als auch die Außenseiten der Pipettiernadel gereinigt. Während die Innenseite durch Einbringen einer Waschflüssigkeit in die Pipettiernadel gereinigt wird, erfolgt die Reinigung der Außenseite, indem die Pipettiernadel relativ zur Waschstation bewegt und hierbei Waschflüssigkeit mithilfe von Düsen auf die Außenseite der Pipettiernadel aufgebracht wird. Verschmutzte Waschflüssigkeit wird mittels einer Absaugung aus dem Ringspalt zwischen der Waschstation und der Pipettiernadel abgesaugt.

Problematisch bei den bekannten Lösungen zur automatisierten Reinigung von Pipettiernadeln ist, dass oftmals ein Kontakt von verschmutzter Waschflüssigkeit und zu reinigenden Bereichen nicht ausgeschlossen wird und teilweise Verschmutzungen in Bereiche der Pipettiernadel gefördert werden, die bis dahin frei von Verschmutzungen waren. Kommen stark anhaftende oder kriechenden Substanze, z.B. Farbstoffe, zum Einsatz, werden die Oberflächen der Pipettiernadeln schnell durch den Farbstoff kontaminiert. Nach der Beendigung des Reinigungsvorgangs bleiben die Pipettiernadeln in diesen Fällen regelmäßig mit einem Flüssigkeitsfilm überzogen und es bilden sich Flüssigkeitstropfen an den Pipettiernadelspitzen. Bei wiederholten Pipettiervorgängen führt dies zu einer Verdünnung der zu pipettierenden Substanz.

Um eine zufriedenstellende Reinigung der Pipettiernadeln sicherstellen zu können, kommen in manchen Fällen spezielle Chemikalien zum Einsatz, die teuer sind, teilweise die Oberfläche der Pipettiernadeln angreifen und aus der verschmutzten Waschflüssigkeit entfernt werden müssen, um diese ordnungsgemäße entsorgen zu können.

Da heute in modernen Laboren eine Vielzahl von Proben durchgeführt werden, spielt die Wirtschaftlichkeit der Laborautomaten eine große Rolle. Ein wesentlicher Faktor hierbei ist, wie lange die Durchführung einzelner Proben einschließlich der Reinigung der Automaten sowie des Zubehörs, wie etwa Pipettiernadeln, dauert. Auch diesbezüglich stellen die bekannten Vorrichtungen und Verfahren zur Reinigung von Pipettiernadeln vielfach keine zufriedenstellende Lösung dar, um eine Reinigung der Pipettiernadeln sowohl in kurzer Zeit als auch mit gleichbleibend hoher Qualität sicherzustellen.

Ausgehend von den aus dem Stand der Technik bekannten Vorrichtungen zur Reinigung von Pipettiernadeln sowie den zuvor geschilderten Problemen liegt der Erfindung daher die Aufgabe zu Grunde, eine entsprechende Reinigungsvorrichtung derart weiterzubilden, dass die Pipettiernadeln von Analysegeräten in kurzer Zeit unter Einsatz möglichst geringer Mengen von Waschflüssigkeit zuverlässig gereinigt werden. Die anzugebende technische Lösung soll insbesondere sicherstellen, dass nach Abschluss des Reinigungsvorgangs eine Pipettiernadel bereitgestellt wird, die weder Verunreinigungen noch Rückstände der zur Reinigung verwendeten Waschflüssigkeit aufweist. Unerwünschte Verdünnungen und/oder Kontaminationen der weiteren zu pipettierenden Substanzen sollen vermieden werden. Gleichzeitig sollen Kontaminationen von nicht verunreinigten Bereichen der Pipettiernadel während des Reinigungsvorgangs vermieden werden. Ebenso sollte der Einsatz unterschiedlicher Waschflüssigkeiten möglich sein. Insgesamt sollte die Reinigung derart erfolgen, dass eine Pipettiernadel nach einer Testdurchführung möglichst schnell wieder gereinigt für die Durchführung weiterer Tests zur Verfügung steht.

Die vorgeschriebene Aufgabe wird mit einer Vorrichtung gemäß Anspruch 1 sowie einem Verfahren gemäß Anspruch 9 gelöst. Ferner wird die Erfindung durch Verwendung der Vorrichtung in einem Analysegerät, wie es im Anspruch 11 angegeben ist, gelöst. Vorteilhafte Ausführungsformen der Erfindung sind jeweils in den abhängigen Ansprüchen enthalten und werden in der nachfolgenden Beschreibung unter teilweiser Bezugnahme auf die Figuren näher erläutert.

Die Erfindung betrifft eine Vorrichtung zum Reinigen wenigstens einer Pipettiernadel mit einer Waschstation, durch die zumindest zeitweise während eines Reinigungsvorgangs eine Innen- und eine Außenseite der Pipettiernadel wenigstens abschnittsweise mit einer Waschflüssigkeit in Kontakt gebracht wird und mit zumindest einem Bewegungsmittel, durch das wenigstens zeitweise vor, nach oder während des Reinigungsvorgangs eine Relativbewegung zwischen der Pipettiernadel und der Wachstation bewirkt wird. Die erfindungsgemäße Vorrichtung zeichnet sich dadurch aus, dass eine Trocknungseinrichtung vorgesehen ist, die zumindest einen während des Reinigungsvorgangs mit wenigstens einer Waschflüssigkeit in Kontakt gebrachten Bereich der Pipettiernadel mit wenigstens einem Trockenmittelstrom beaufschlagt. Die Vorrichtung ist dadurch gekennzeichnet, dass die Vorrichtung ferner eine Steuereinheit und Mittel zum Leiten einer Waschflüssigkeit durch den Innenraum der Pipettiernadel aufweist, wobei die Steuereinheit die Mittel zum Leiten einer Waschflüssigkeit derart ansteuert, dass die Reinigung der im Innenraum der Pipettiernadel angeordneten Oberflächen auf einer Weise erfolgt, dass während eines Reinigungszyklus die Waschflüssigkeit mit unterschiedlichen Strömungsgeschwindigkeiten durch den Innenraum der Pipettiernadel in Richtung der Pipettiernadelspitze geleitet wird. Wesentlich für die erfindungsgemäße Reinigungsvorrichtung ist somit, dass die Reinigungsvorrichtung eine Trocknungseinrichtung aufweist, die die gereinigte Pipettiernadel im Anschluss an die Durchführung des Reinigungsvorgangs zuverlässig von Waschflüssigkeit befreit. Die erfindungsgemäße Vorrichtung verwirklicht somit ein zweistufiges Verfahren, wobei in einer ersten Stufe die Reinigung der Innen -sowie der Außenseite der Pipettiernadel erfolgt, während in einem zweiten Schritt der mit Waschflüssigkeit in Kontakt gebrachte Bereich derart mit einem Trockenmittelstrom beaufschlagt wird, dass keine Waschflüssigkeit an der Oberfläche der Pipettiernadel verbleibt. Grundsätzlich ist es in diesem Zusammenhang denkbar, eine entsprechende Trocknung sowohl auf der Innen- als auch auf der Außenseite durchzuführen. Vorzugsweise erfolgt eine derartige Trocknung mit einem Trockenmittelstrom auf der Außenseite einer Pipettiernadel. Weiterhin bevorzugt wird die Pipettiernadel zumindest zeitweise im Anschluss an den Reinigungsvorgang während des Trocknungsvorgangs derart bewegt, dass die auf der Pipettiernadel verbliebene Waschflüssigkeit zuverlässig mi Hilfe des Trockenmittelstroms von der Oberfläche der Außenseite der Pipettiernadel entfernt wird.

Gemäß einer speziellen Ausführungsform der Erfindung weist der Trockenmittelstrom, mit dem die Trocknungseinrichtung die Oberfläche der Pipettiernadel zumindest abschnittsweise beaufschlagt, eine Strahlung, einen Wärmestrom und/oder einen Luftstrom auf. Wesentlich hierbei ist, dass ein Trockenmittelstrom erzeugt wird, der nach Abschluss des Wasch- bzw. Reinigungsvorgangs für die restlose Entfernung der auf der Pipettiernadel vorhandenen Waschflüssigkeit sorgt. In diesem Zusammenhang ist es denkbar, dass auf der Pipettiernadel verbliebene Waschflüssigkeit mithilfe von Strahlung, insbesondere mit Infrarotstrahlung, und/oder einem Wärmestrom verdampft wird, sodass nach dem Waschund dem Trocknungsvorgang eine gereinigte und vollständig getrocknete Pipettiernadel ohne Waschflüssigkeitsrückstände zur Verfügung gestellt wird.

In einer besonders vorteilhaften Weiterbildung der Erfindung ist der Trockenmittelstrom als Luftstrom ausgeführt, der auf die Außenseite der Pipettiernadel gerichtet ist. Hierfür verfügt die Trocknungseinrichtung über wenigstens eine Luftdüse, die einen gerichteten Luftstrom auf die Oberfläche der Außenseite der Pipettiernadel richtet. Vorzugsweise sind die Luftdüse und deren Luftversorgung derart ausgeführt, dass ein Luftstrom in Form eines Luftschwerts, Luftmessers bzw. Luftvorhangs erzeugt wird, der auf der Oberfläche der Pipettiernadel verbliebene Waschflüssigkeit zuverlässig von der Oberfläche entfernt. Denkbar ist es hierbei, dass die Pipettiernadel während des Trocknungsvorgangs relativ zur Trocknungseinrichtung bewegt wird, sodass mithilfe des von der Trocknungseinrichtung erzeugten Luftstroms, insbesondere in Form eines Luftmessers oder Luftschwerts, auf der Oberfläche der Pipettiernadel verbliebene Waschflüssigkeit entgegen der Bewegungsrichtung der Pipettiernadel, bevorzugt in Richtung der Pipettiernadelspitze, abgestreift wird.

Auf vorteilhafte Weise ist es denkbar, dass die Pipettiernadel während des Trocknungsvorgangs nach oben gezogen wird, sodass der Luftstrom die auf der Oberfläche der Pipettiernadel verbliebene Waschflüssigkeit nach unten in Richtung auf die Pipettiernadelspitze abstreift. Überschüssige Waschflüssigkeit, die so mithilfe eines Luftwertes von der Oberfläche der Pipettiernadel abgestreift wird, wird entweder mithilfe einer Absaugung abgesaugt oder in einem unterhalb der Trocknungseinrichtung angeordneten Behälter aufgefangen.

In einer speziellen Ausführungsform verfügt das Bewegungsmittel über einen Halter zur Befestigung der Pipettiernadel, sodass die Pipettiernadel während des Reinigungsvorgangs relativ zur Reinigungseinrichtung bewegt wird. Vorzugsweise wird die Pipettiernadel zunächst von oben in die noch nicht aktivierte Reinigungseinrichtung eingefahren.

Beginnend vom untersten Punkt wird die Pipettiernadel nun nach oben bewegt, wobei Waschflüssigkeit mithilfe von Reinigungsdüsen auf die Oberfläche der Außenseite der Pipettiernadel aufgebracht wird und die nunmehr verschmutzte Waschflüssigkeit nach unten in einen Auffangbehälter abläuft oder durch eine Absaugung abgeführt wird. Vor, nach oder während der Reinigung der Außenseite der Pipettiernadel mithilfe wenigstens einer Reinigungsdüse, vorzugsweise zweier gegenüberliegend angeordneter Reinigungsdüsen, wird auch die Innenseite der Pipettiernadel mit einer Waschflüssigkeit in Kontakt gebracht, indem die Waschflüssigkeit von oben nach unten in Richtung der Pipettiernadelspitze den Innenraum der Pipettiernadel durchströmt. Die aus der Pipettiernadel austretende Flüssigkeit wird wiederum wahlweise abgesaugt oder in einem geeigneten Auffangbehälter aufgefangen.

Auf vorteilhafte Weise sind die Reinigungsdüsen derart ausgeführt, dass der Flüssigkeitsstrahl ausreichend kinetische Energie aufweist, um Verschmutzungen auf der Oberfläche der Außenseite der Pipettiernadel zuverlässig zu entfernern. Wesentlich hierbei ist, dass die Reinigung der Pipettenoberfläche nicht alleine durch das Aufbringen von Waschflüssigkeit und eventuell Einsatz spezieller Chemikalien erfolgt, sondern gleichfalls durch die kinetische Energie des Flüssigkeitsstrahls bewirkt wird. Die wenigstens eine Reinigungsdüse einschließlich der Waschflüssigkeitsversorgung sind derart ausgeführt, dass aufgrund der Größe des Flüssigkeitsvolumenstroms sowie der speziellen Formung des Waschflüssigkeitsstrahls wenigstens teilweise eine mechanische Reinigung der Pipettenoberfläche erfolgt. Vorteilhaft ist es in diesem Zusammenhang, wenn die Waschstation wenigstens zwei gegenüberliegend angeordnete Waschdüsen aufweist, wobei ein an den jeweiligen Durchmesser der Pipettiernadel angepasster Flüssigkeitsstrahl erzeugt wird, sodass die Pipettiernadel von allen Seiten gleichmäßig von einem Wasserstrahl gereinigt wird. Auf vorteilhafte Weise ist die wenigstens eine oder sind die zwei Flüssigkeitsdüsen in Bezug auf ihren Austrittsquerschnitt sowie die Kontur und Formung der Austrittsfläche entsprechend angepasst ausgeführt.

In einer speziellen Ausführungsform weist die Waschstation einen Grundkörper auf, der zumindest teilweise bevorzugt aus einem Kunststoff hergestellt ist. Hierbei verfügt der Grundkörper über wenigsten eine Ausnehmung die eine Flüssigkeitsdüse aufweist. Zum Schutz des Grundkörpers, insbesondere der Außenkanten der Flüssigkeitsdüse, vor allem vor Abrasionserscheinungen, ist vorzugsweise im Bereich des Flüssigkeitsaustrittsbereichs der wenigstens einen Flüssigkeitsdüse, und hier insbesondere im Bereich einer entlang des Umfangs des Düsenaustritts verlaufenden Kante, ein Schutzelement, beispielsweise ein geformtes Blechelement, vorgesehen. Gemäß einer besonders geeigneten Ausführungsform der Erfindung ist die Flüssigkeitsdüse in Form eines separaten Düsenbauteils, vorzugsweise eines Blechbauteils, ausgeführt, das im Grundkörper angeordnet ist. Das Düsenbauteil verfügt auf vorteilhafte Weise am Düsenaustritt im Bereich einer Umfangskante über einen Radius, um den Düsenstrahl aufzufächern. Alternativ oder in Ergänzung ist der Grundkörper bevorzugt derart ausgeführt, dass der Düsenstrahl entgegen der Bewegungsrichtung der Pipettiernadel während des Reinigungsvorgangs, insbesondere nach unten, abgelenkt wird.

Gemäß einer besonderen Weiterbildung der Erfindung ist die wenigstens eine Reinigungsdüse derart ausgeführt, dass der auf die Oberfläche der Außenseite der Pipettiernadel gerichtete Flüssigkeitsstrahl in Form eines Fächers ausgeführt ist. Diese Maßnahme stellt sicher, dass Verschmutzungen und Anlagerungen, wie sie etwa durch Probematerial oder üblicherweise in einem biochemischen Labor verwendete Farbstoffe, beispielsweise Hämatoxylin, Eosin, Kongorot oder ähnliche Substanzen, verursacht werden, vergleichsweise einfach von der Pipettenoberfläche entfernt werden können. Weiterhin wird aufgrund der Bewegung der Pipettiernadel entlang der wenigstens einen Reinigungsdüse und einer bevorzugt zumindest leichten Neigung der Achse des Flüssigkeitsstrahls entgegen der Bewegungsrichtung die Waschflüssigkeit gemeinsam mit den Verschmutzungen in Richtung der Pipettenspitze abgeführt. Es ist somit sichergestellt, dass bereits gereinigte Bereiche der Pipettiernadel nicht erneut verschmutzt werden und die mit Verschmutzungen kontaminierte Waschflüssigkeit zuverlässig in eine hierfür vorgesehene Absaugung oder einen Auffangbehälter abgeführt wird.

Die Reinigung der Innenseite bzw. der im Innenraum angeordneten Oberflächen der Pipettiernadel erfolgt erfindungsgemäß, indem während eines Reinigungszyklus Waschflüssigkeit mit unterschiedlichen Strömungsgeschwindigkeiten bzw. unterschiedlichen Volumen- oder Massenströmen durch den Innenraum der Pipettiernadel in Richtung der Pipettiernadelspitze geleitet werden. Besonders vorteilhaft ist es in diesem Zusammenhang, wenn die Innenseite der Pipettiernadel in einem ersten Reinigungsschritt langsam von einem Waschflüssigkeitsstrom durchströmt wird, wobei insbesondere während dieses ersten Reinigungsschritts der Innenseite etwa 200-300 µl, bevorzugt zwischen 240 und 270 µl der Waschflüssigkeit mit einem Volumenstrom von 90 -110 µl/s abgegeben werden. In einem zweiten Reinigungsschritt des Innenraums der Pipettiernadel wird über einen vergleichsweise langen Zeitraum von 4-7 Sekunden Flüssigkeit in den Innenraum der Pipettiernadel hineingetropft. In diesem Zeitraum werden etwa 40 - 70 µl, bevorzugt 50 µl Waschflüssigkeit mit einem Volumenstrom von 9 -11 µl/s in den Innenraum der Pipettiernadel eingetropft.

Im Anschluss an dieses sogenannte Abtropfen des Innenraumes wird wiederum langsam über einen Zeitraum von 2 - 3 Sekunden eine Menge von 240-270 µl Waschflüssigkeit, also wiederum ein Volumenstrom von etwa 90 -110 µl/s durch die Pipettiernadel geleitet.

Abgeschlossen wird dieser mehrstufige, intervallmäßig ausgeführte Reinigungsprozess der Oberflächen im Innenraum der Pipettiernadel mit einem Hochdruckreinigungsschritt, bei dem Flüssigkeit mit besonders hoher Geschwindigkeit in einem kurzen Zeitintervall durch die Pipettiernadel gefördert wird. In diesem letzten Schritt der, 0,02-0,03 s dauert, werden ungefähr 25 - 35 µl einer Waschflüssigkeit mit einem Volumenstrom von 1100 - 1300 µl/s durch den Innenraum der Pipettiernadel gefördert. Durch dieses abrupte Fördern eines vergleichsweise großen Volumenstroms der Waschflüssigkeit, der quasi durch den Innenraum der Pipettiernadel hindurchgespuckt wird, über einen vergleichsweise kurzen Zeitraum, werden zuverlässig letzte Tropfen der Waschflüssigkeit an der Spitze der Pipettiernadel mitgerissen und aus der Pipettiernadel abgeführt.

Selbstverständlich können die gewählten Zeitspannen, Anzahl der Waschschritte und/oder Volumenströme, insbesondere durch Variation der Pipettiernadelgeometrie, verändert werden. Wesentlich ist jeweils, dass in mehreren hintereinander erfolgenden Waschritten unterschiedliche Volumenströme der Waschflüssigkeit durch die Pipettiernadel geleitet werden. Hierbei wird in einem letzten Schritt Flüssigkeit durch die Pipettiernadel, wie oben beschrieben, quasi hindurchgespuckt, um letzte verbliebene Flüssigkeitsreste an der Nadelspitze mitzureißen, während in einem anderen Schritt durch Einbringen einer sehr geringen Flüssigkeitsmenge ein Abtropfen von Waschflüssigkeit an der Nadelspitze bewirkt wird.

Auf vorteilhafte Weise findet die Reinigung des Innenraums der Pipettiernadel zumindest teilweise gleichzeitig mit dem Reinigen der Außenseite statt. In diesem Zusammenhang ist es denkbar, dass mit der Reinigung des Innenraumes begonnen wird und schließlich nach einer Wartezeit, die etwa 7 - 8 Sekunden andauern kann, mit dem Waschen der Außenseite mithilfe geeigneter Reinigungsdüsen begonnen wird. Die gemeinsame Reinigung der Außenund der Innenseite dauert etwa 10-12 s, wobei die Pipettiernadel während der Reinigung der Außenseite auf vorteilhafte Weise entlang der Reinigungsdüsen bewegt wird.

In einer speziellen Ausführungsform der Erfindung wird die Pipettiernadel während der Reinigung der Außenseite von unten nach oben bewegt, wobei die Waschflüssigkeit außen an der Pipettiernadel nach unten strömt und unterhalb der Pipettiernadel in einem Auffangbecken aufgefangen oder durch eine geeignete Absaugung abgesaugt wird. Besonders vorteilhaft an dieser speziellen Gestaltung ist, dass eine unerwünschte Verschmutzung sauberer, insbesondere bereits gereinigter Bereiche der Pipettiernadel aufgrund der Bewegung der Pipettiernadel entlang der Reinigungsdüsen sichergestellt wird. Die wenigstens eine zu reinigende Pipettiernadel wird hierbei während des Reinigungsvorgangs an den Reinigungsdüsen vorbeigeführt, sodass ausgehend vom oberen sauberen Bereich hin zum verunreinigten unteren Bereich gewaschen wird. Vorzugsweise zumindest zeitweise gleichzeitig wird Waschflüssigkeit durch den Innenraum der Pipettiernadel gefördert und damit die Pipettiernadel auch innen gereinigt. Wie zuvor beschrieben, erfolgt die Innenreinigung bevorzugt in einem Intervallverfahren, wobei während des Reinigungsvorgangs Waschflüssigkeit mit unterschiedlichen Volumenströmen durch die Pipettiernadel gefördert wird.

Die erfindungsgemäße technische Lösung zeichnet sich dadurch aus, dass nach Abschluss des Reinigungsvorgangs eine Trocknung der gereinigten Pipettiernadel durch Aufbringen eines geeigneten Trockenmittelstroms, insbesondere eines Luftstroms in Form eines Luftschwerts bzw. Luftmesser oder Luftvorhang durchgeführt wird. Vorzugsweise wird die Pipettiernadel während des Waschvorgangs zunächst an den Reinigungsdüsen entlang bewegt, insbesondere nach oben bewegt, und nach Erreichen eines oberen Endpunktes und Abschluss des Waschvorgangs wieder in die untere Endposition bewegt. Anschließenden wird die Pipettiernadel während eines Trocknungsvorgangs nochmals aus der unteren Endposition in die obere Endposition bewegt, wobei mithilfe wenigstens einer Luftdüse ein Luftstrom auf die Oberfläche der Außenseite der Pipettiernadel aufgebracht wird. Der Luftstrom ist hierbei in Form eines Luftvorhangs, Luftschwerts oder Luftmessers ausgeführt, sodass auf der Oberfläche der Außenseite der Pipettiernadel verbliebene Waschflüssigkeit nach unten in Richtung der Pipettiernadelspitze abgestreift wird. Unterhalb der Pipettiernadel abtropfende Flüssigkeit wird wahlweise aufgefangen oder mithilfe einer geeigneten Absaugung abgesaugt.

Die erfindungsgemäße Vorrichtung verfügt des Weiteren bevorzugt über eine zentrale Steuereinheit, die mit geeigneten Sensoren zur Erfassung von Messwerten verbunden ist und auf der Grundlage der so erfassten Betriebsparameter einer Vorrichtung zur Reinigung einer Pipettiernadel geeignete Steuersignale erzeugt, sodass die Reinigung der Pipettiernadel automatisiert erfolgen kann. Somit ist es denkbar, auf diese Weise wenigstens einen geschlossenen Regelkreis zu schaffen. Selbstverständlich ist es denkbar die zentrale Steuereinheit in die Steuerung eines Analysegerätes oder eine Laborsteuerung zu integrieren oder zumindest einen entsprechend geeigneten Datenaustausch sicherzustellen.

Neben einer Vorrichtung zur Reinigung einer Pipettiernadel betrifft die Erfindung auch ein Verfahren zum Reinigen wenigstens einer Pipettiernadel, bei dem zumindest zeitweise während eines Reinigungsvorgangs eine Innen- und eine Außenseite der Pipettiernadel wenigstens abschnittsweise mit einer Waschflüssigkeit in Kontakt gebracht wird und mithilfe eines Bewegungsmittel eine Relativbewegung zumindest zeitweise vor, nach oder während des Reinigungsvorgangs zwischen der Pipettiernadel und der Waschstation bewirkt wird. Das erfindungsgemäße Verfahren zeichnet sich dadurch aus, dass zumindest ein während des Reinigungsvorgangs mit Waschflüssigkeit in Kontakt gebrachter Bereich der Pipettiernadel mit wenigstens einem Trockenmittelstrom beaufschlagt wird. Mithilfe des erfindungsgemäßen Verfahrens wird somit in einem der eigentlichen Reinigung der Pipettiernadel nachgeschalteten Schritt der gereinigte Bereich getrocknet. Hierfür wird ein Trockenmittelstrom verwendet, der auf die Oberfläche, insbesondere auf die Oberfläche der Außenseite der Pipettiernadel aufgebracht wird. Der Trockenmittelstrom kann in Form von Strahlung, als Wärmestrom und/oder als Luftstrom ausgeführt sein. Auf besonders vorteilhafte Weise wird als Trockenmittelstrom ein Luftstrom auf die Außenseite der Pipettiernadel aufgebracht, wobei der Luftstrom in Form eines Luftschwertes, bspw. in Fächerform, ausgeführt wird, der auf der Oberfläche der Pipettiernadel verbliebene Waschflüssigkeit entgegen der Bewegungsrichtung der Pipettiernadel abstreift. Vorzugsweise wird die Flüssigkeit so in Richtung der Pipettiernadel und Spitze geführt, sodass von der Pipettiernadel entfernte Flüssigkeit schließlich in einem Auffangbecken aufgefangen oder durch eine Absaugung abgesaugt werden kann.

Die Pipettiernadel wird im Inneren gereinigt, indem eine geeignete Waschflüssigkeit durch die Pipettiernadel geleitet wird.

Das Verfahren zeichnet sich dadurch aus, dass die Reinigung der im Innenraum der Pipettiernadel angeordneten Oberflächen auf eine Weise erfolgt, und dass während eines Reinigungszyklus die Waschflüssigkeit mit unterschiedlichen Strömungsgeschwindigkeiten durch den Innenraum der Pipettiernadel in Richtung der Pipettiernadelspitze geleitet werden.

In einer vorteilhaften Ausführungsform der Erfindung ist ferner vorgesehen, dass eine Innenreinigung der zu reinigenden Pipettiernadel mithilfe eines Flüssigkeitsstroms erfolgt, dessen Volumenstrom während der Reinigung variiert wird. Vorzugsweise erfolgt die Reinigung des Innenraums der Pipettiernadel hierbei in vier Stufen, wobei in einem ersten Reinigungsschritt Waschflüssigkeit mit einem Volumenstrom normaler Stärke durch die Pipettiernadel geleitet wird, in einem zweiten Schritt lediglich Tropfen einer Waschflüssigkeit in den Innenraum der Pipettiernadel abgegeben werden, in einem dritten Schritt wiederum ein normaler Waschflüssigkeitsstrom durch die Pipettiernadel gefördert wird während zum Abschluss Waschflüssigkeit innerhalb eines besonders kurzen Zeitraums durch die Pipettiernadel gefördert wird, sodass in diesem Fall quasi von einem "Spucken" der Waschflüssigkeit gesprochen werden kann. In diesem letzten Schritt der Reinigung des Innenraums der zu reinigenden Pipettiernadel werden eventuell an der Nadelspitze verbliebene Flüssigkeitstropfen mitgerissen und so der Innenraum der Pipettiernadel vollständig gereinigt und von Flüssigkeit befreit.

Erfindungsgemäß findet eine Vorrichtung zur Reinigung einer Pipettiernadel mit wenigstens einem der zuvor beschriebenen technischen Merkmale in einem Analysegerät, einem Laborautomaten, einem Färbeautomaten und/oder in einem Inkubationszeitautomaten Verwendung. Auf besonders vorteilhafte Weise findet die Erfindung Einsatz in einem Färbeautomaten auf dem Gebiet der Pathohistochemie. In einem entsprechenden Färbeautomaten, mit dem bevorzugt Gewebeschnitte auf geeignete Weise untersucht werden, müssen die einzelnen Pipettiernadeln zwischen den einzelnen Färbeschritten gereinigt werden, um eine Verschleppung von Farbstoffen und Reagenzien zwischen den einzelnen Verfahrensschritten zuverlässig zu vermeiden. Vorteilhaft ist es in diesem Zusammenhang, wenn nicht nur eine, sondern eine Mehrzahl von Pipettiernadeln vorzugsweise gleichzeitig gereinigt wird.

Diese Mehrzahl von Nadeln wird bevorzugt gleichzeitig einer entsprechenden Reinigungsvorrichtung zugeführt, wobei auf vorteilhafte Weise zunächst eine Reinigung des Innenraums sowie der Außenseite der Pipettiernadel erfolgt, und in einem zweiten Schritt die Trocknung der Außenseite der Pipettiernadel mithilfe eines geeigneten Trockenmittelstroms, insbesondere mithilfe eines Luftstroms erfolgt.

Im Folgenden wird die Erfindung ohne Beschränkung des allgemeinen Erfindungsgedankens anhand von speziellen Ausführungsbeispielen unter Bezugnahme auf die Figuren näher erläutert. Dabei zeigen:
- Fig. 1:: Schematisch dargestellter Aufbau einer Vorrichtung zur Reinigung von Pipettiernadel;
- Fig.2:: Schnittansicht einer Vorrichtung zur Reinigung von Pipettiernadeln;
- Fig. 3:: Perspektivische Explosionsansicht einer Vorrichtung zur Reinigung von Pipettiernadeln;
- Fig. 4:: Düsenblech;
- Fig. 5:: Teilschnittansicht einer Vorrichtung zur Reinigung von Pipettiernadeln;
- Fig. 6:: Färbeautomat für histologische Untersuchungen mit einer Vorrichtung zur Reinigung von Pipettiernadeln;
- Fig. 7:: Ablaufschema eines Prozesses zur Reinigung und Trocknung einer Pipettiernadel.

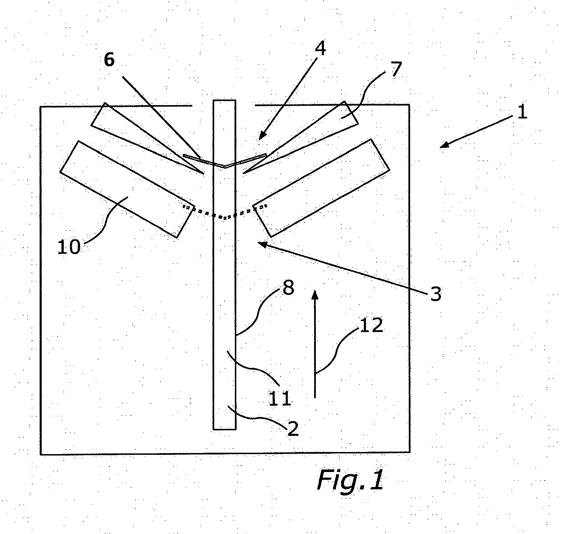

Figur 1 zeigt in einer schematischen Darstellung eine erfindungsgemäß ausgeführte Vorrichtung 1 zur Reinigung von Pipettiernadeln 2. Bei den zu reinigenden Pipettiernadeln 2 handelt es sich um wiederverwendbare Pipetten, mit denen flüssige Proben, Reagenzien und/oder Farbstoffe für unterschiedliche Untersuchungen in automatisiert arbeitenden Laborautomaten aufgenommen, transportiert und bedarfsgerecht abgegeben werden können. Um zwischen den einzelnen Prozessschritten einer Untersuchung Verschleppungen der Proben, Reagenzien und oder Farbstoffe zu vermeiden, werden wiederverwendbare Pipettiernadeln 2, die bewegbar in den Laborautomaten angeordnet sind, zwischen den einzelnen Prozessschritten gereinigt.

Wie Figur 1 in diesem Zusammenhang zu entnehmen ist, verfügt eine erfindungsgemäß ausgeführte Vorrichtung 1 zur Reinigung von wiederverwendbaren Pipettiernadeln 2 über eine Waschstation, mit der die Pipettiernadeln 2 innen und außen mit Hilfe einer Waschflüssigkeit gereinigt werden, und über eine Trockeneinheit 4, die nach Abschluss des Waschvorgangs zumindest die mit Waschflüssigkeit in Berührung gekommenen Bereiche 5 der äußeren Oberfläche der Pipettiernadel 2 mit Hilfe eines Trockenmittelstroms 6, bspw. ein Luftstrom, ein Wärmestrom oder Strahlung trocknet. Auf diese Weise wird sichergestellt, dass die gereinigte Pipettiernadel 2, insbesondere deren Spitze, keine Waschflüssigkeitsrückstände mehr aufweist und für den folgenden Prozessschritt trocken Form bereitgestellt wird.

Die an einem Halter 9 befestigten und innerhalb eines Laborautomaten bewegbar angeordneten Pipettiernadeln 2 werden zu ihrer Reinigung zunächst von oben nach in die Reinigungsvorrichtung 1 in eine untere Endposition eingefahren. Daraufhin wird zunächst der Innenraum 11 der Pipettiernadel 2 mit einer Waschflüssigkeit gereinigt, die die Pipettiernadel 2 von oben nach unten durchströmt. Während der Reinigung des Innenraumes 11 der Pipettiernadel 2 wird die Waschflüssigkeit in unterschiedlichen Zeitintervallen mit variierendem Volumenstrom durch die Pipettiernadel 2 gefördert. Vorzugsweise erfolgt die Innenraumspülung in vier Schritten, wobei in einem ersten und dritten Schritt der Innenraum 11 der Pipettiernadel 2 von einem normalen Volumenstrom der erforderlichen Waschflüssigkeit durchströmt wird, während in einem ersten Schritt über ein vergleichsweise kurzes Zeitintervall nur so wenig Waschflüssigkeit durch die Pipettiernadel 2 geleitet wird, dass diese von der Spitze der Pipettiernadel 2 abtropft. Im letzten Reinigungsschritt des Innenraums 11 wird in einem sehr kurzen Zeitraum eine vergleichsweise große Menge Waschflüssigkeit durch die Pipettiernadel 2 geleitet, sodass hier quasi von einem "hindurchspucken" der Waschflüssigkeit gesprochen werden kann. In diesem letzten Schritt werden letzte Tropfen von Waschflüssigkeit und/oder Verschmutzungen mitgerissen, sodass sich nach Abschluss der Innenraumreinigung keine Waschflüssigkeit und Verschmutzungen an der Pipettiernadel 2 befinden. Wie bereits erläutert worden ist, ist es, insbesondere in Abhängigkeit der gewählten Pipettengeometrie, denkbar die Anzahl die Waschschritte, die verschiedenen Zeitspannen und/oder die Volumenströme zu variieren.

Bereits während der Reinigung des Innenraums 11 der Pipettiernadel 2 beginnt auch die Reinigung der Außenfläche 8. Zur Reinigung der Außenfläche 8 der Pipettiernadel 2 wird diese aus der unteren Endposition nach oben bewegt und gleichzeitig mit Hilfe zweier gegenüberliegend angeordneter Flüssigkeitsdüsen 10 ein Waschflüssigkeitsstrahl umfänglich auf die Oberfläche 8 der Pipettiernadel 2 gelenkt. Generell ist es von Bedeutung, dass eine Relativbewegung zwischen Pipettiernadel 2 und den Reinigungsdüsen 10 initiiert wird. In Abhängigkeit der technischen Ausführung könnte diese auch bewirkt werden, indem die Pipettiernadel 2 ruht, während die Reinigungsdüsen 10 bewegt werden.

Die beiden aus den gegenüberliegend angeordneten Reinigungsdüsen 10 austretenden Waschflüssigkeitsstrahlen sind fächerförmig ausgeführt und werden derart von gegenüberliegenden Seiten auf die äußere Oberfläche 8 gelenkt, dass Waschflüssigkeit über den gesamten Umfang der Pipettiernadel 2 auf die Außenfläche 8 auftrifft. Ferner sind die Reinigungsdüsen 10 derart gestaltet, dass die beiden Waschflüssigkeitsstrahlen leicht nach unten und damit entgegen der Bewegungsrichtung der Pipettiernadel 2 gerichtet sind. Auf diese Weise wird sichergestellt, dass bereits gereinigte Bereiche 5 auf der äußeren Oberfläche 8 der Pipettiernadel 2 nicht mit Waschflüssigkeit, die mit Verschmutzungen kontaminiert ist, in Berührung kommen, sondern mit Verschmutzungen kontaminierte Waschflüssigkeit nach unten in Richtung der Pipettenspitze abläuft. Die abfließende Waschflüssigkeit, die zumindest teilweise mit Verschmutzungen kontaminiert ist, wird unterhalb der Pipettiernadelspitze in einem Auffangbehälter aufgefangen und/oder mittels einer geeigneten Absaugung abgesaugt.

Weiterhin ist vorgesehen, dass die Anlagenkomponenten, insbesondere die erforderliche Pumpe zur Bereitstellung einer Waschflüssigkeit an den Reinigungsdüsen 10 sowie die Reinigungsdüsen 10 selbst derart ausgeführt sind, dass der aus den Reinigungsdüsen 10 austretende Flüssigkeitsstrahl die äußere Oberfläche 8 der Pipettiernadel 2 nicht nur chemisch, sondern zum wesentlichen Teil mechanisch reinigt. Um dies zu erreichen, wird ein vergleichsweise harter Flüssigkeitsstrahls mit hoher kinetische Energie erzeugt und auf die äußere Oberfläche 8 der Pipettiernadel 2 gelenkt. Die äußere Oberfläche 8 der Pipettiernadel 2 wird somit nicht nur mit geeigneter Waschflüssigkeit benetzt, sondern gleichfalls findet eine mechanische Reinigung der äußeren Oberfläche 8 statt, sodass ein besonders gutes Reinigungsergebnis in vergleichsweise kurzer Zeit erreicht wird.

Sobald die Pipettiernadel 2 die obere Endstellung erreicht hat, also auch die Spitze der Pipettiernadel 2 gereinigt ist, wird die Pipettiernadel 2 wiederum in die untere Endposition verfahren. Anschließend wird diese erneut nach oben bewegt, wobei durch zwei oberhalb der Reinigungsdüsen 10 angeordnete Luftdüsen 7 einer Trocknungseinheit 4 ein schräg nach unten entgegen der Bewegungsrichtung der Pipettiernadel 2 gerichteter Luftstrom 6 auf die äußere Oberfläche 8 der Pipettiernadel 2 gelenkt wird. Generell ist es ebenfalls denkbar, die Pipettiernadel 2 einmalig zu verfahren und den Reinigungs- sowie den Trocknungsschritt gleichzeitig auszuführen. Ebenso ist es vorstellbar, die Luftdüsen 7 der Trocknungseinheit 4 nicht oberhalb der Reinigungsdüsen 10, sondern seitlich davon anzuordnen und die Pipettiernadel 2 nach erfolgtem Reinigungsschritt und dem Verfahren in die untere Endposition seitlich zu verfahren und dann zum Trocknen nach oben zu bewegen. Diese Ausgestaltung hat den Vorteil, dass ein längerer Bereich der Pipettiernadel 2 gereinigt und anschließend getrocknet werden kann.

Der Luftstrom 6 ist in Form eines sogenannten Luftschwerts, Luftmessers oder Luftvorhangs ausgeführt, sodass auf der äußeren Oberfläche Pipettiernadel 2 verbliebene Waschflüssigkeit zuverlässig nach unten entgegen der Bewegungsrichtung Pipettiernadel 2 abgestreift wird. Die auf diese Weise von der äußeren Oberfläche 8 der Pipettiernadel 2 entgegen der Bewegungsrichtung nach unten abgestreifte Waschflüssigkeit wird wiederum unterhalb der Spitze der Pipettiernadel 2 in einem geeigneten Auffangbehälter aufgefangen und/oder mittels einer Absaugung abgesaugt.

Sobald die Pipettiernadel 2 nunmehr erneut die obere Endposition erreicht hat, ist nicht nur der Innenraum und die Außenfläche gereinigt, sondern es wird gleichzeitig sichergestellt, dass an den Oberflächen der Pipettiernadel, insbesondere an der Spitze der Pipettiernadel keine Waschflüssigkeit mehr vorhanden ist.

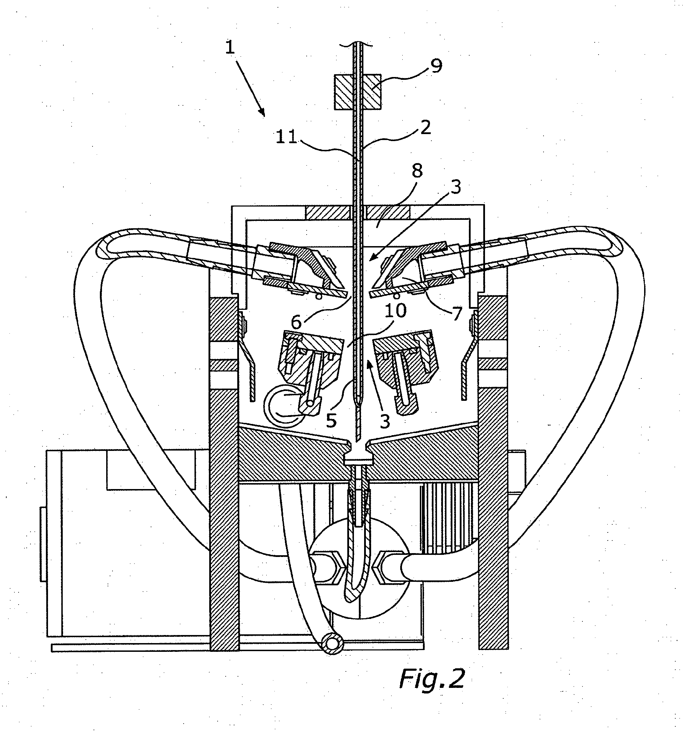

Figur 2 zeigt eine erfindungsgemäß ausgeführte Vorrichtung 1 zur Reinigung einer wiederverwendbaren, innerhalb eines Laborautomaten verfahrbaren Pipettiernadel 2, die sich in einem in die Waschstation 3 der Reinigungsvorrichtung 1 eingefahrenen Zustand befindet. Mit Hilfe der dargestellten Reinigungsvorrichtung 1 wird die Pipettiernadel 2 im Inneren 11 gereinigt, indem eine geeignete Waschflüssigkeit durch die Pipettiernadel 2 geleitet wird. Die aus dem Innenraum 11 während der Reinigung austretende, mit Verschmutzungen kontaminierte Waschflüssigkeit wird in einer unterhalb der Spitze der Pipettiernadel 2 angeordneten Auffangwanne aufgefangen und aus dieser abgesaugt, sodass die kontaminierte Waschflüssigkeit auf geeignete Weise entsorgt oder, sofern dies möglich ist, wieder aufbereitet werden kann. Für die Reinigung der äußeren Oberfläche 8 der Pipettiernadel 2 verfügt die Waschstation 3 über zwei gegenüberliegend angeordnete Reinigungsdüsen 10, aus denen während des Reinigungsvorgangs Waschflüssigkeit in Form eines fächerförmigen Flüssigkeitsstrahls auf die Außenfläche 8 der Pipettiernadel 2 aufgebracht wird. Während des Reinigungsvorgangs wird die Pipettiernadel 2 aus einer unteren Endposition in eine obere Endposition bewegt, sodass die Waschflüssigkeit entlang der äußeren Oberfläche 8 der Pipettiernadel 2 nach unten in die Auffangwanne strömt.

Die von zwei gegenüberliegenden Seiten auf die äußere Oberfläche 8 der Pipettiernadel 2 gelenkten Waschflüssigkeitsstrahlen umschließen einerseits den Umfang der Pipettiernadel 2 und verfügen andererseits über eine derart hohe kinetische Energie, dass durch die Flüssigkeitsstrahlen eine mechanische Reinigung der äußeren Pipettenoberfläche 8 bewirkt wird. Auf der äußeren Oberfläche 8 der Pipettiernadel 2 befindliche Verschmutzungen, insbesondere Verkrustungen von Proben, Reagenzien und/oder Farbstoffen, werden so besonders zuverlässig und schnell von der äußeren Oberfläche 8 der Pipettiernadel 2 entfernt.

Darüber hinaus befinden sich bei der in Figur 2 gezeigten Reinigungsvorrichtung 1 oberhalb der Reinigungsdüsen 10 zwei an gegenüberliegenden Seiten der Pipettiernadel 2 angeordnete Luftdüsen 7 einer Trocknungseinheit 4. Diese Luftdüsen 7 leiten einen Luftstrom 6 auf die äußere Oberfläche 8 der Pipettiernadel 2, der entgegen der Bewegungsrichtung der Pipettiernadel 2 nach unten gerichtet ist. Durch die beiden vorgesehenen Luftdüsen 7 der Trocknungseinheit 4 wird ein Luftstrom 6 bzw. Luftvorhang in Form eines Luftschwerts erzeugt, der auf der äußeren Oberfläche 8 der Pipettiernadel 2 verbliebene Waschflüssigkeit zuverlässig entgegen der Bewegungsrichtung der Pipettiernadel 2 in Richtung auf die Pipettenspitze hin abstreift. Auf diese Weise wird sichergestellt, dass nach dem Waschen auf der äußeren Oberfläche 8 der Pipettiernadel 2 verbliebene Waschflüssigkeit zuverlässig von dieser abgestreift und in einer unterhalb der Pipettenspitze 2 befindlichen Auffangwanne aufgefangen und schließlich abgesaugt wird. Nach Beendigung des Trockenvorgangs, also sobald sich die Pipettiernadel 2 wiederum an dem oberen Endpunkt befindet, steht die wiederverwendbare Pipettiernadel 2 gereinigt und in getrocknetem Zustand für die Durchführung weitere Tests in einem automatisiert arbeitenden Laborautomaten zur Verfügung.

Generell ist es in diesem Zusammenhang denkbar, dass die Pipettiernadel 2 zu ihrer Reinigung und Trocknung insgesamt zweimal von unten nach oben bewegt wird, wobei der Waschschritt und der Trocknungsschritt nacheinander ausgeführt werden. Ebenso ist es grundsätzlich denkbar, dass die Pipettiernadel 2 nur einmal von ihrem unteren zu ihrem oberen Endpunkt verfahren wird und während dieser Zeitspanne sowohl die Reinigung der äußeren Oberfläche 8 der Pipettiernadel 2 mit Hilfe der durch die Reinigungsdüsen 10 aufgebrachten Waschflüssigkeitsstrahlen und gleichzeitig die Trocknung mithilfe eines Luftstroms 6 in Form eines Luftschwerts durchgeführt wird. Wesentlich für die letztgenannte technische Lösung ist, dass die Luftdüsen 7 der Trocknungseinheit 4 in Bewegungsrichtung der Pipettiernadel 2 hinter den Reinigungsdüsen 10 angeordnet sind.

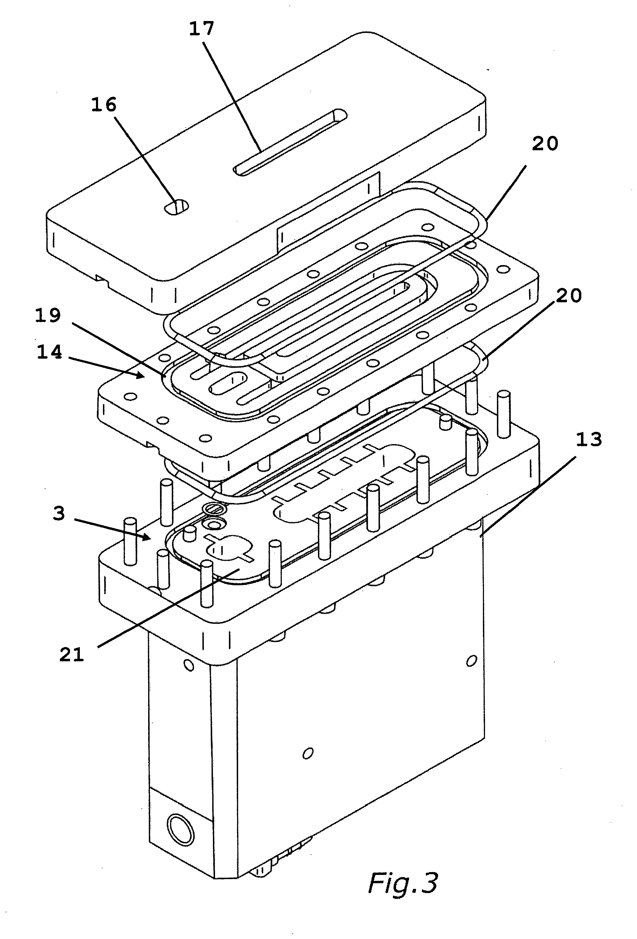

Figur 3 zeigt eine weitere spezielle Ausführungsform einer Vorrichtung zur Reinigung von wiederverwendbaren Pipettiernadeln 2, wie sie beispielsweise in Laborautomaten zur Durchführung von histologischen oder immunochemischen Untersuchungen einsetzbar ist.

In Figur 3 ist eine Explosionszeichnung der Reinigungsvorrichtung 1 dargestellt, die als wesentliche Bauteile über einen Grundkörper 13, einen Zwischendeckel 14 sowie über einen oberen Abschlussdeckel 15 verfügt, von denen der Grundkörper 13 und der Zwischendeckel 14 jeweils aus Kunststoff und der obere Abschlussdeckel 15 aus einem geeigneten Metall gefertigt sind und mit Hilfe von Schraubverbindungen miteinander verbunden werden. Da der obere Abschlussdeckel 15 nicht mit Waschflüssigkeit in Berührung kommt, bietet sich für diesen die Verwendung eines Metalls an, vor allem da sich dieses Material besser als Kunststoff für die Herstellung von Schraubverbindungen eignet. Im Inneren der Reinigungsvorrichtung 1 sind zwei Schächte 16, 17 vorgesehen, wobei in den kleineren, runden Schacht 16 eine Pipettiernadel 2 und in den größeren, ovalen Schacht 17 fünf Pipettiernadeln 2 gleichzeitig zur Reinigung eingefahren werden können.

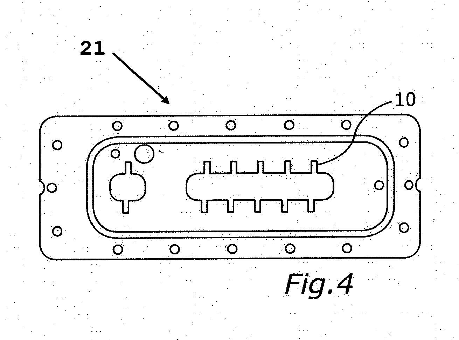

Als wesentliches Bauteil ist zwischen dem Grundkörper 13 und dem Zwischendeckel 14 ein Düsenblech 21 vorgesehen, das mit dem Grundkörper 13 Kanäle 18 zur Versorgung der Reinigungsdüsen 10 mit Waschflüssigkeit einschließt und ferner Ausnehmungen aufweist, die die Reinigungsdüsen 10 bilden. Die Gestaltung des Düsenblechs 21 wird im Zusammenhang mit der Beschreibung der Figur 4 näher erläutert.

Zwischen dem Zwischendeckel 14 und dem oberen Abschlussdeckel 15 sind Luftdüsen 7 angeordnet wobei die Luftversorgungskanäle 19 und die Luftdüsen 7 als Ausnehmungen im Zwischendeckel 14 ausgebildet sind. Zur Einleitung eines Reinigungsprozesses werden eine einzelne und/oder fünf Pipettiernadeln 2 zunächst in die hierfür vorgesehenen Schächte 16, 17 in die untere Endposition eingefahren. Während des Wasch- und Trocknungsvorgangs werden diese jeweils innerhalb der Schächte 16, 17 nach oben an den Reinigungs- 10 und den Luftdüsen 7 vorbei bewegt. In Bewegungsrichtung der Pipettiernadeln 2 sind die Luftdüsen 7 in einem Abstand hinter den Reinigungsdüsen 10 angeordnet, sodass sich die Luftdüsen 7 in Einbauposition oberhalb der Reinigungsdüsen 10 befinden.

Die Reinigungsdüsen 10 sind jeweils beidseitig der zu reinigenden Pipettiernadeln 2 angeordnet und bringen von gegenüberliegenden Seiten einen fächerförmigen Waschflüssigkeitsstrahl auf die jeweiligen äußeren Oberflächen 8 der Pipettiernadeln 2 auf, wobei die Flüssigkeitsstrahlen über eine derart hohe kinetische Energie verfügen, dass nicht nur eine chemische, sondern auch eine mechanische Reinigung der jeweiligen Pipettiernadeln 2 erfolgt. Der bzw. die Flüssigkeitsstrahlen sind hierbei nach unten gerichtet, sodass mit Verunreinigung kontaminierte Waschflüssigkeit nach unten entgegen der Bewegungsrichtung der während der Reinigung nach oben bewegten Pipettiernadeln 2 abfließt. Die so abschließende Waschflüssigkeit wird im unteren Bereich der Schächte 16, 17 im Grundkörper 13 in einer Auffangwanne aufgefangen und durch eine Absaugung abgesaugt.

Die Luftdüsen 7, mit denen die erfindungsgemäß vorgesehene Trocknung der Außenflächen 8 der Pipettiernadeln 2 durch Ausbildung eines Luftstroms 6 in Form eines Luftschwerts oder Luftmessers bewirkt wird, sind zwischen der Oberseite des Zwischendeckels 14 und dem oberen Abschlussdeckel 15 angeordnet. Der Zwischendeckel 14 ist derart ausgeführt, dass die Luft durch entsprechende Luftkanäle 19 im Zwischendeckel 14, die vom oberen Abschlussdeckel 15 eingeschlossen werden, zu den Luftdüsen 7 geleitet wird. Die Luftdüsen 7 sind wiederum derart ausgebildet, dass der Luftstrom 6 in Form eines Luftschwerts schräg nach unten gerichtet, entgegen der Bewegungsrichtung der Pipettiernadel 2 während des Trocknungsvorgangs, auf die äußere Oberfläche 8 einer Pipettiernadel 2 auftrifft. Da jeweils auf gegenüberliegenden Seiten einer bewegten Pipettiernadel 2 eine Luftdüse 7 angeordnet ist, wird auf der äußeren Oberfläche 8 der Pipettiernadel 2 befindliche Waschflüssigkeit über den gesamten Umfang entgegen der Bewegungsrichtung der Pipettiernadel 2 mit Hilfe des erzeugten Luftschwerts abgestreift. Die Formung des Luftstroms 6 wird durch eine geeignete Ausbildung der Kanten im Bereich der Luftdüsen 7 realisiert. Auch hier ist es generell denkbar, die Kanten durch ein Blech zu verstärken oder die Luftdüsen 7 als Blechbauteil, insbesondere als Düsenblech 21, auszuführen. Die die Luftdüsen 7 umschließenden Kanten verfügen hierfür über einen Radius oder eine Fase, sodass der Luftstrom 6 dieser Kontur folgt.

Durch das Trocknen der Pipettiernadeln 2 mit Hilfe eines als Luftschwert ausgebildeten Luftstroms wird zuverlässig sichergestellt, dass nach Abschluss des Wasch- und Trocknungsvorgangs eine vollkommen gereinigte und trockene Pipettiernadel 2 für weitere Tests im Analysegerät zur Verfügung steht.

Um auf bevorzugte Weise die Flüssigkeitsstrahlen und Luftströme, die die Pipettiernadeln 2 einhüllende, sogenannte Luftschwerter bilden, in horizontaler Ebene fächerförmig zu gestalten und in vertikaler Richtung nach unten abzulenken, sind somit im Bereich der jeweiligen Düsenöffnungen entsprechende Radien oder Fasen im Düsenblech 21 und/oder im Zwischendeckel 14 vorgesehen, denen die jeweiligen Ströme folgen.

Sowohl zwischen dem Grundkörper 13 und dem Zwischendeckel 14 als auch zwischen dem Zwischendeckel 14 und dem oberen Abschlussdeckel 15 sind entsprechende O-Ring-Dichtungen 20 vorgesehen, sodass keine Waschflüssigkeit oder Luft nach außen austreten kann. Des Weiteren sind Zuführungen vorgesehen, um die Waschflüssigkeits- 18 sowie Luftkanäle 19 mit dem erforderlichen Fluid zu versorgen.

Das in der Reinigungsvorrichtung zwischen Grundkörper 13 und Zwischendeckel 14 angeordnete Düsenblech 21 ist in Figur 4 nochmals als Einzelteil dargestellt. Das Düsenblech 21 verfügt hierbei über eine zumindest annähernd runde und eine ovale Bohrung mit zusätzlichen Ausnehmungen. Während eines Reinigungsvorgangs kann durch die runde Bohrung eine Pipettiernadel 2 in vertikaler Richtung verfahren werden, während in der ovalen Bohrung bis zu fünf parallel nebeneinander angeordnete Pipettiernadeln 2 gleichzeitig vertikal verfahren werden können. Selbstverständlich ist es denkbar, die Reinigungsvorrichtung 1 bzw. das Düsenblech 21 derart zu verändern, dass noch mehr, insbesondere acht, Pipettiernadeln 2 gleichzeitig verfahren und somit gewaschen und getrocknet werden können. Die Reinigungsdüsen 10 werden durch die zusätzlichen rechteckigen Ausnehmungen gebildet, sodass mit dem in Figur 4 gezeigten Düsenblech 21 insgesamt zwölf Reinigungsdüsen 10 bereitgestellt werden.

Die Zufuhr der Waschflüssigkeit zu den jeweils gegenüberliegend an der ovalen sowie der runden Bohrung angeordneten rechteckigen Ausnehmungen erfolgt über Kanäle 18, die in Einbaulage des Düsenblechs 21 zwischen diesem und dem Grundkörper 13 der Reinigungsvorrichtung 1, wie er in Figur 3 gezeigt ist, ausgebildet sind. Die zusätzlichen Ausnehmungen an den Bohrungen sind derart ausgeführt, dass mit einem Düsenblech 21 in Einbaulage durch die Reinigungsdüsen 10 ein in horizontaler Ebene fächerförmig ausgebildeter Flüssigkeitsstrahl erzeugt wird, der darüber hinaus nach unten und damit entgegen der Bewegungsrichtung der Pipettiernadeln 2 während des Reinigungsvorgangs gerichtet ist. Da jeweils zwei Reinigungsdüsen 10 gegenüberliegend zu beiden Seiten einer Pipettiernadel 2 angeordnet sind, werden die an den Reinigungsdüsen 10 vorbei bewegten Pipettiernadeln 2 über den gesamten Umfang zuverlässig gereinigt. Die Strahlformung wird durch eine geeignete Ausführung der Kanten des Düsenblechs 21 im Bereich der die Düsen 10 bildenden Ausnehmungen realisiert. In diesem Bereich verfügt das Düsenblech 21 an den Kanten über geeignete Radien oder Fasen, deren Kontur der Flüssigkeitsstrahl folgt.

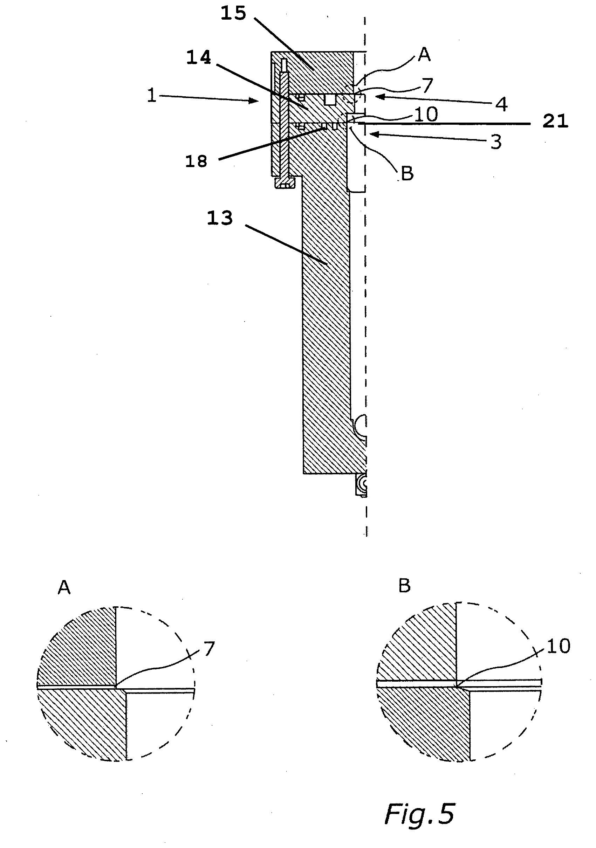

Figur 5 zeigt zur weiteren Verdeutlichung in einer Teilschnittansicht eine Seite der Reinigungsvorrichtung 1 mit Grundkörper 13, Zwischendeckel 14 und Abschlussdeckel 15, die miteinander verschraubt sind. Zwischen dem Grundkörper 13 und dem Zwischendeckel 14 ist ein Düsenblech 21 eingeklemmt, das, wie im Zusammenhang mit der Beschreibung der Figur 4 erläutert wurde, ausgeführt ist und über das an den entsprechenden Reinigungsdüsen 10 ein Waschflüssigkeitsstrahl von zwei Seiten auf die zu reinigenden Pipettiernadeln 2 aufgebracht wird.

In der Detailansicht "B" ist eine spezielle Ausgestaltung einer Reinigungsdüse 10 des zwischen Grundkörper 13 und Zwischendeckel 14 eingeklemmten Düsenblechs 21 dargestellt. Wesentlich hierbei ist, dass das Düsenblech 21 im Bereich des Flüssigkeitsaustritts an seinen Kanten jeweils über einen Radius oder eine Fase verfügt, sodass der austretende Flüssigkeitsstrahl nicht nur nach unten gerichtet ist, was durch eine geeignete Ausformung der Kanten des Grundkörpers 13 in diesem Bereich bewirkt wird, sondern gleichzeitig fächerförmig und mit einer derart hohen kinetischen austritt, dass eine mechanische Reinigungswirkung über bewirkt wird. Da jeweils zwei Reinigungsdüsen 10 auf gegenüberliegenden Seiten einer bewegten Pipettiernadel 2 angeordnet sind, wird die Pipettiernadel 2 zuverlässig über ihren gesamten Umfang gereinigt.

Ergänzend ist in der Detailansicht "A" der Figur 5 die Form einer Luftdüse 7, die zwischen dem Zwischendeckel 14 und dem oberen Abschlussdeckel 15 angeordnet ist, dargestellt. Der Zwischendeckel 14 ist in diesem Fall derart ausgeformt bzw. ein entsprechend geeigneter Luftkanal in diesen eingebracht, dass ein Luftspalt gebildet wird. Auch hier ist im unteren Austrittsbereich der Düse 7 ein Radius oder eine Fase vorgesehen, sodass der aus der Luftdüse 7 austretende Luftstrom 6 nach unten abgelenkt und derart geformt wird, dass durch die wiederum beidseitig der Pipettiernadel 2 angeordneten Luftdüsen 7 ein sogenanntes Luftschwert über eine Umfangslinie der äußeren Pipettiernadeloberfläche 8 gelegt wird und so auf der äußeren Oberfläche 8 verbliebene Waschflüssigkeit zuverlässig entgegen der Bewegungsrichtung der Pipettiernadel 2 nach unten abstreift wird.

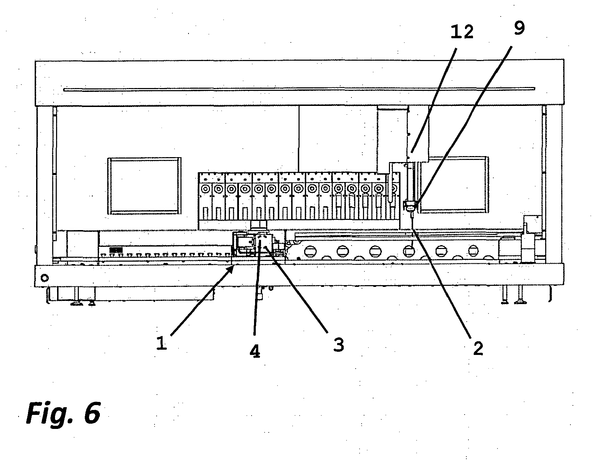

Figur 6 zeigt in einer Frontansicht einen Färbeautomaten für histologische Untersuchung von Gewebeschnitten. Derartiger Laborautomaten zeichnen sich dadurch aus, dass eine Vielzahl von Gewebeschnitten automatisiert und in Abhängigkeit der jeweiligen Untersuchungen mit Reagenzien und/oder geeigneten Farbstoffen beaufschlagt werden. Ein derartiger Laborautomat verfügt über bewegbar in dem Automaten angeordnete Pipettiernadeln 2, mit denen die jeweils benötigten Flüssigkeiten aufgenommen, transportiert und auf den hierfür vorgesehenen Gewebeschnitt aufgebracht werden. Zwischen den einzelnen Inkubationsschritten müssen die Pipettiernadeln 2 zuverlässig gereinigt werden, damit Verschleppungen von Reagenzien und/oder Farbstoffen zwischen den einzelnen Testschritten zuverlässig vermieden werden.

Der in Figur 6 gezeigte Färbeautomat verfügt hierfür über eine erfindungsgemäß ausgeführte Reinigungsvorrichtung 1 zur Reinigung und Trocknung der im Automaten zum Einsatz kommenden Pipettiernadeln 2. In der Reinigungsvorrichtung 1 befindet sich sowohl eine Waschstation 3 mit Reinigungsdüsen 10, sodass die Pipettiernadeln 2 sowohl an ihren Außenflächen 8 als auch im Inneren 11 von Verunreinigungen befreit werden. Weiterhin verfügt die Reinigungsvorrichtung 1 über eine Trocknungseinrichtung 4, sodass mithilfe von Waschflüssigkeit auf ihren Außenflächen 8 gereinigte Pipettiernadeln 2 nach dem Waschvorgang mit Hilfe eines Luftstroms 6, der auf bevorzugte Weise in Form eines fächerförmigen Luftschwerts ausgeführt ist, von auf der äußeren Oberfläche 8 verbliebene Waschflüssigkeit befreit werden.

Auf bevorzugte Weise wird eine, bevorzugt eine Mehrzahl von Pipettiernadeln 2 gleichzeitig sowohl innen als auch außen mittels einer Waschflüssigkeit gereinigt und anschließend mit Hilfe von Luftdüsen 7, die ein Luftschwert um die Oberflächen der Pipettiernadeln 2 legen, getrocknet. Nach erfolgter Reinigung und Trocknung der wiederverwendbaren Pipettiernadeln 2 stehen diese für die Durchführung weiterer Tests zur Verfügung. Die Reinigung der Pipettiernadeln 2 erfolgt hierbei aufgrund der Ausnutzung der Erfindung besonders gründlich und vergleichsweise schnell. Aufgrund des zusätzlich erfindungsgemäß vorgesehenen Trocknungsschrittes wird sichergestellt, dass nach Abschluss der Reinigung keine Waschflüssigkeit an den Pipettiernadeln 2, insbesondere im Bereich der Spitzen, verbleibt und somit unerwünschte Verdünnungen der nachfolgend aufgenommenen Flüssigkeiten, insbesondere Reagenzien und/oder Farbstoffe, verhindert wird. Das Vorsehen einer erfindungsgemäß ausgeführten Reinigungsvorrichtung 1 in einem Färbeautomaten für die Durchführung von immunochemischen und/oder histologischen Tests ermöglicht somit eine schnelle und gleichfalls gründliche Reinigung von wiederverwendbaren Pipettiernadeln 2 und gewährleistet darüber hinaus das Verfälschungen der Testergebnisse aufgrund von unerwünschten Verdünnungen der Reagenzien oder Farbstoffe vermieden werden.

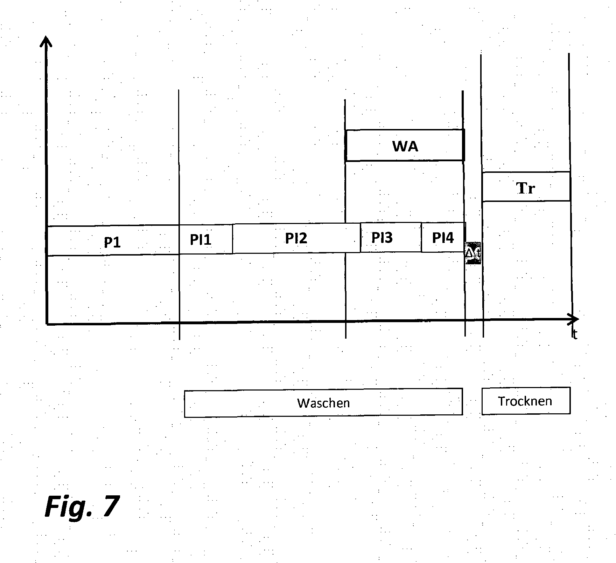

Abschließend ist in Figur 7 schematisch ein bevorzugter Ablauf einer Pipettiernadelreinigung dargestellt, bei der die Reinigung des Innenraums 11 sowie der äußeren Oberfläche 8 zumindest zeitweise gleichzeitig erfolgt. In einem ersten Prozessschritt P1 wird mindestens eine Pipettiernadel in eine erfindungsgemäß ausgeführte Reinigungsvorrichtung eingefahren und in der Pipettiernadel vorhandene Restflüssigkeit in eine Auffangwanne abgegeben. Anschließend startet der Waschprozess, indem in einem ersten Waschschritt WI1 langsam Waschflüssigkeit in die Pipettiernadel 2 eingeleitet wird. In einem zweiten Waschschritt WI2, der deutlich länger als der erste dauert, wird der in die Pipettiernadel 2 eingeleitete Volumenstrom deutlich reduziert, sodass nunmehr mit Verschmutzungen kontaminierte Waschflüssigkeit lediglich von der Spitze der Pipettiernadel 2 abtropft.

Nachdem etwa drei Viertel des für den zweiten Waschschritt W2 des Innenraums 11 der Pipettiernadel 2 vorgesehenen Zeitraums abgelaufen ist, wird im Prozessschritt WA mit dem Waschen der äußeren Oberfläche begonnen, indem die Pipettiernadel 2 innerhalb der Waschstation 3 nach oben verfahren und die Reinigungsdüsen 10 aktiviert werden, sodass ein Flüssigkeitsstrahl, wie bereits beschrieben, auf die an den Reinigungsdüsen 10 vorbeibewegte äußere Oberfläche 8 aufgebracht wird. Nachdem etwa ein Drittel des Zeitraums, der für das Waschen der äußeren Oberfläche der Pipettiernadel im Prozessschritt WA vorgesehen ist, abgelaufen ist, wird der durch den Innenraum 11 geleitete Volumenstrom der Waschflüssigkeit in einem dritten waschschritt WI3erhöht, sodass die Pipettiernadel 2 wiederum, wie im ersten Innenreinigungsschritt WI1, langsam von Waschflüssigkeit durchströmt wird. Während des letzten Drittels des für das Waschen der äußeren Oberfläche 8 vorgesehenen Zeitraums wird über eine kurze Zeit in einem vierten Innenwaschschritt WI4 ein besonders hoher Volumenstrom Waschflüssigkeit durch das Innere 11 der Pipettiernadel 2 gefördert, sodass hier von einem "Spucken" von Waschflüssigkeit durch die Pipettiernadel 2 gesprochen werden kann. Auf diese Weise werden letzte Reste der Waschflüssigkeit zuverlässig aus der Pipettiernadel 2 und von ihrer Spitze entfernt. Nach Abschluss des Innenreinigungsvorgangs und des Waschens der äußeren Oberfläche 8 wird die Pipettiernadel 2 nach unten in die untere Endposition verfahren.

Nun beginnt der Trocknungsvorgang Tr, wobei die Pipettiernadel 2 von unten nach oben in eine obere Endposition verfahren und gleichzeitig an zwei beidseitig der Pipettiernadel 2 angeordneten Luftdüsen 7 vorbeibewegt wird. Auf diese Weise wird auf der äußeren Oberfläche 8 nach dem Waschen verbliebene Waschflüssigkeit nach unten entgegen der Bewegungsrichtung der Pipettiernadel 2 mit einem Luftstrom 6 abgestreift und in eine unterhalb der Pipettiernadel 2 angeordnete Auffangwanne abgeleitet, von wo die Waschflüssigkeit abgeführt, insbesondere abgesaugt, wird. Nach Abschluss des beschriebenen kombinierten Reinigungs- und Trocknungsprozesses, der eine intervallmäßig durchgeführte Reinigung des Inneren 11 einer Pipettiernadel 2 einschließt, steht eine vollkommen gereinigte und trockene Pipettiernadel 2 für die Durchführung weiterer Tests zur Verfügung.

### Bezugszeichenliste

- 1: Reinigungsvorrichtung
- 2: Pipettiernadel
- 3: Waschstation
- 4: Trockeneinrichtung
- 5: gereinigter Bereich der Pipettiernadel
- 6: Trockenmittelstrom
- 7: Luftdüse
- 8: Außenfläche der Pipettiernadel
- 9: Halter
- 10: Flüssigkeitsdüse
- 11: Innenfläche
- 12: Bewegungsmittel
- 13: Grundkörper
- 14: Zwischendeckel
- 15: oberer Abschlussdeckel
- 16: Schacht für eine Pipettiernadel
- 17: Schacht für eine Mehrzahl von Pipettiernadeln
- 18: Flüssigkeitsversorgung
- 19: Luftversorgung
- 20: Dichtung
- 21: Düsenblech

## Patentansprüche

1. Vorrichtung zum Reinigen wenigstens einer Pipettiernadel (2) mit einer Waschstation (3), durch die zumindest zeitweise während eines Reinigungsvorgangs eine Innenund eine Außenseite der Pipettiernadel (2) wenigstens abschnittsweise mit einer Waschflüssigkeit in Kontakt gebracht wird und mit zumindest einem Bewegungsmittel (12), durch das wenigstens zeitweise vor, nach oder während des Reinigungsvorgangs eine Relativbewegung zwischen der Pipettiernadel (2) und der Waschstation (3) bewirkt wird,
wobei, dass eine Trocknungseinrichtung (4) vorgesehen ist, die zumindest einen während des Reinigungsvorgangs mit Waschflüssigkeit in Kontakt gebrachten Bereich (5) der Pipettiernadel (2) mit wenigstens einem Trockenmittelstrom (6) beaufschlagt,
**dadurch gekennzeichnet, dass** die Vorrichtung ferner eine Steuereinheit und Mittel zum Leiten einer Waschflüssigkeit durch den Innenraum der Pipettiernadel aufweist, wobei die Steuereinheit die Mittel zum Leiten einer Waschflüssigkeit derart ansteuert, dass die Reinigung der im Innenraum der Pipettiernadel angeordneten Oberflächen auf einer Weise erfolgt, dass während eines Reinigungszyklus die Waschflüssigkeit mit unterschiedlichen Strömungsgeschwindigkeiten durch den Innenraum der Pipettiernadel in Richtung der Pipettiernadelspitze geleitet wird.

2. Vorrichtung nach Anspruch 1,
**dadurch gekennzeichnet, dass** der Trockenmittelstrom (6), mit dem die Trocknungseinrichtung (4) die Pipettiernadel (2) zumindest abschnittsweise beaufschlagt, eine Strahlung, einen Wärmestrom und/oder einen Luftstrom aufweist.

3. Vorrichtung nach Anspruch 2,
**dadurch gekennzeichnet, dass** die Trocknungseinrichtung (4) derart ausgeführt, dass mittels einer Luftdüse (7) wenigstens ein auf die Außenfläche (8) der Pipettiernadel (2) ausgerichteter Luftstrom in Form eines Luftschwerts erzeugt wird.

4. Vorrichtung nach einem der Ansprüche 1 bis 3,
**dadurch gekennzeichnet, dass** das Bewegungsmittel (3) einen Halter (9) zur Befestigung der Pipettiernadel (2) aufweist und die Pipettiernadel (2) während des Reinigungsvorgangs relativ zur Waschstation (3) bewegt wird

5. Vorrichtung nach einem der Ansprüche 1 bis 4,
**dadurch gekennzeichnet, dass** die Waschstation (3) wenigstens eine Flüssigkeitsdüse (10) aufweist, über die die Außenfläche (8) der Pipettiernadel (2) während des Reinigungsvorgangs zumindest zeitweise mit einem gerichteten Strahl der Waschflüssigkeit beaufschlagt wird.

6. Vorrichtung nach einem der Ansprüche 1 bis 5,
**dadurch gekennzeichnet, dass** die Pipettiernadel (2) während des Reinigungsvorgangs mit dem Bewegungsmittel (3) zumindest zeitweise in Richtung eines Pipettiernadelendes, das einer Pipettiernadelspitze gegenüberliegt, bewegt wird.

7. Vorrichtung nach Anspruch 5 oder 6,
**dadurch gekennzeichnet, dass** die Pipettiernadel (2) während des Reinigungsvorgangs zumindest zeitweise vom Bewegungsmittel (3) entlang der wenigstens einen Düse sowie der Trocknungseinrichtung (4) nach oben bewirkt wird.

8. Vorrichtung nach einem der Ansprüche 1 bis 7,
**dadurch gekennzeichnet, dass** die Waschstation (3) derart ausgeführt ist, dass auf der Innenseite (11) der Pipettiernadel (2) während des Reinigungsvorgangs wenigstens zwei unterschiedliche Waschflüssigkeits-Volumenströme gefördert werden.

9. Verfahren zum Reinigen wenigstens einer Pipettiernadel (2) mit einer Waschstation (3), durch die zumindest zeitweise während eines Reinigungsvorgangs eine Innenund eine Außenseite (11, 8) der Pipettiernadel (2) wenigstens abschnittsweise mit einer Waschflüssigkeit in Kontakt gebracht wird und mit zumindest einem Bewegungsmittel (3), das wenigstens zeitweise vor, nach oder während des Reinigungsvorgangs die Pipettiernadel (2) relativ) bewegt,
wobei zumindest ein während des Reinigungsvorgangs mit Waschflüssigkeit in Kontakt gebrachter Bereich (5) der Pipettiernadel (2) wenigstens zeitweise mit wenigstens einem Trockenmittelstrom (6) getrocknet wird,
wobei die Pipettiernadel im Inneren gereinigt wird, indem eine geeignete Waschflüssigkeit durch die Pipettiernadel geleitet wird,
**dadurch gekennzeichnet, dass** die Reinigung der im Innenraum der Pipettiernadel angeordneten Oberflächen auf eine Weise erfolgt, dass während eines Reinigungszyklus die Waschflüssigkeit mit unterschiedlichen Strömungsgeschwindigkeiten durch den Innenraum der Pipettiernadel in Richtung der Pipettiernadelspitze geleitet wird.

10. Verfahren nach Anspruch 9,
**dadurch gekennzeichnet, dass** ein Luftstrom in Form eines fächerförmigen Luftschwerts auf die Oberfläche der Außenseite (8) der Pipette (2) gerichtet wird.

11. Verwendung einer Vorrichtung nach wenigstens einem der Ansprüche 1 bis 8 in einem Analysegerät, einem Laborautomaten, einem Färbeautomaten und/oder in einem Inkubationsautomaten.

12. Verwendung einer Vorrichtung nach wenigstens einem der Ansprüche 1 bis 8 in einem Färbeautomaten zur Anfärbung pathohistochemischer Gewebeschnitte.

## Claims

1. Device for cleaning of at least one pipetting needle (2) with a washing station (3), by which an inside and an outside of the pipetting needle (2) are brought into contact at least for a portion with a washing liquid, at least temporarily during a cleaning process, and with at least one movement means (12), by which a relative movement is brought about between the pipetting needle (2) and the washing station (3) at least temporarily before, after, or during the cleaning process,
wherein a drying device (4) is provided, which subjects at least one region (5) of the pipetting needle (2) brought into contact with washing liquid during the cleaning process to at least one flow of drying agent (6),
**characterized in that** the device further comprises a control unit and means for conducting a washing liquid through the interior space of the pipetting needle, wherein the control unit controls the means for conducting a washing liquid such that the cleaning of the surfaces arranged in the interior space of the pipetting needle takes place in such a way that the washing liquid is conducted with different flow velocities through the interior space of the pipetting needle in the direction of the pipetting needle tip during one cleaning cycle.

2. Device according to Claim 1,
**characterized in that** the flow of drying agent (6) to which the pipetting needle (2) is subjected for at least a portion by the drying device (4) comprises a radiation, a heat flux, and/or an air stream.

3. Device according to Claim 2,
**characterized in that** the drying device (4) is designed such that it generates by means of an air nozzle (7) at least one air stream in the form of an air sword directed onto the outer surface (8) of the pipetting needle (2).

4. Device according to one of Claims 1 to 3,
**characterized in that** the movement means (3) comprises a holder (9) for fastening the pipetting needle (2) and the pipetting needle (2) is moved relatively to the washing station (3) during the cleaning process.

5. Device according to one of Claims 1 to 4,
**characterized in that** the washing station (3) comprises at least one liquid nozzle (10), by which the outer surface (8) of the pipetting needle (2) is subjected to a directed jet of the washing liquid at least temporarily during the cleaning process.

6. Device according to one of Claims 1 to 5,
**characterized in that** the pipetting needle (2) is moved during the cleaning process by the movement means (3) at least temporarily towards a pipetting needle end, which lies opposite a pipetting needle tip.

7. Device according to Claim 5 or 6,
**characterized in that** the pipetting needle (2) is moved upwards at least temporarily during the cleaning process by the movement means (3) along the at least one nozzle as well as the drying device (4).

8. Device according to one of Claims 1 to 7,
**characterized in that** the washing station (3) is designed such that at least two different volume flows of washing liquid are delivered on the inside (11) of the pipetting needle (2) during the cleaning process.

9. Method for the cleaning of at least one pipetting needle (2) with a washing station (3), by which an inside and an outside (11, 8) of the pipetting needle (2) are brought into contact at least for a portion with a washing liquid, at least temporarily during a cleaning process, and with at least one movement means (3), which moves the pipetting needle (2) relatively at least temporarily before, after, or during the cleaning process,
wherein at least one region (5) of the pipetting needle (2) brought into contact with washing liquid during the cleaning process is dried at least temporarily with at least one flow of drying agent (6),
wherein the pipetting needle is cleaned on the inside by conducting a suitable washing liquid through the pipetting needle,
**characterized in that** the cleaning of the surfaces arranged in the interior space of the pipetting needle takes place in such a way that the washing liquid is conducted with different flow velocities through the interior space of the pipetting needle in the direction of the pipetting needle tip during one cleaning cycle.

10. Method according to Claim 9,
**characterized in that** an air stream in the form of a fan-shaped air sword is directed onto the surface of the outside (8) of the pipette (2).

11. Use of a device according to at least one of Claims 1 to 8 in an analysis instrument, an automatic laboratory analyser, an automatic stainer and/or in an automatic incubator.

12. Use of a device according to at least one of Claims 1 to 8 in an automatic stainer for the staining of pathohistochemical tissue sections.

## Revendications

1. Dispositif pour le nettoyage d'au moins une aiguille de pipetage (2), avec une station de lavage (3), par laquelle, au moins temporairement pendant une opération de nettoyage, un côté intérieur et un côté extérieur de l'aiguille de pipetage (2) sont mis en contact au moins par sections avec un liquide de lavage, et avec au moins un moyen de déplacement (12), par lequel un déplacement relatif est provoqué au moins temporairement avant, après ou pendant l'opération de nettoyage entre l'aiguille de pipetage (2) et la station de lavage (3),
un appareil de séchage (4) étant prévu, qui alimente au moins une zone (5) de l'aiguille de pipetage (2) mise en contact avec le liquide de lavage pendant l'opération de nettoyage avec au moins un courant de moyen de séchage (6),
**caractérisé en ce que** le dispositif présente en outre une unité de commande et des moyens pour conduire un liquide de lavage à travers l'espace intérieur de l'aiguille de pipetage, l'unité de commande commandant les moyens pour conduire un liquide de lavage de telle sorte que le nettoyage des surfaces agencées dans l'espace intérieur de l'aiguille de pipetage a lieu d'une manière telle que, pendant un cycle de nettoyage, le liquide de lavage est conduit à travers l'espace intérieur de l'aiguille de pipetage en direction de la pointe de l'aiguille de pipetage à des vitesses d'écoulement différentes.

2. Dispositif selon la revendication 1,
**caractérisé en ce que** le courant de moyen de séchage (6), avec lequel l'appareil de séchage (4) alimente l'aiguille de pipetage (2) au moins par sections, comprend un faisceau, un courant de chaleur et/ou un courant d'air.

3. Dispositif selon la revendication 2,
**caractérisé en ce que** l'appareil de séchage (4) est réalisé de telle sorte qu'au moins un courant d'air orienté vers la surface extérieure (8) de l'aiguille de pipetage (2) est généré sous la forme d'une lame d'air au moyen d'une buse d'air (7).

4. Dispositif selon l'une quelconque des revendications 1 à 3,
**caractérisé en ce que** le moyen de déplacement (3) présente un support (9) pour la fixation de l'aiguille de pipetage (2) et l'aiguille de pipetage (2) est déplacée par rapport à la station de lavage (3) pendant le processus de nettoyage.

5. Dispositif selon l'une quelconque des revendications 1 à 4,
**caractérisé en ce que** la station de lavage (3) présente au moins une buse de liquide (10), par l'intermédiaire de laquelle la surface extérieure (8) de l'aiguille de pipetage (2) est alimentée au moins temporairement avec un jet dirigé du liquide de lavage pendant l'opération de nettoyage.

6. Dispositif selon l'une quelconque des revendications 1 à 5,
**caractérisé en ce que**, pendant l'opération de nettoyage, l'aiguille de pipetage (2) est déplacée avec le moyen de déplacement (3) au moins temporairement en direction d'une extrémité de l'aiguille de pipetage qui est opposée à une pointe de l'aiguille de pipetage.

7. Dispositif selon la revendication 5 ou 6,
**caractérisé en ce que**, pendant l'opération de nettoyage, l'aiguille de pipetage (2) est provoquée vers le haut, au moins temporairement, par le moyen de déplacement (3), le long de l'au moins une buse ainsi que de l'appareil de séchage (4).

8. Dispositif selon l'une quelconque des revendications 1 à 7,
**caractérisé en ce que** la station de lavage (3) est réalisée de telle sorte qu'au moins deux courants volumiques de liquide de lavage différents sont transportés sur le côté intérieur (11) de l'aiguille de pipetage (2) pendant l'opération de nettoyage.

9. Procédé pour le nettoyage d'au moins une aiguille de pipetage (2) avec une station de lavage (3), par laquelle, au moins temporairement pendant une opération de nettoyage, un côté intérieur et un côté extérieur (11, 8) de l'aiguille de pipetage (2) sont mis en contact au moins par sections avec un liquide de lavage et avec au moins un moyen de déplacement (3), qui déplace relativement l'aiguille de pipetage (2) au moins temporairement avant, après ou pendant l'opération de nettoyage,
au moins une zone (5) de l'aiguille de pipetage (2) mise en contact avec le liquide de lavage pendant l'opération de nettoyage étant séchée au moins temporairement avec au moins un courant de moyen de séchage (6),
l'aiguille de pipetage étant nettoyée à l'intérieur en conduisant un liquide de lavage approprié à travers l'aiguille de pipetage,
**caractérisé en ce que** le nettoyage des surfaces agencées dans l'espace intérieur de l'aiguille de pipetage a lieu d'une manière telle que, pendant un cycle de nettoyage, le liquide de lavage est conduit à travers l'espace intérieur de l'aiguille de pipetage en direction de la pointe de l'aiguille de pipetage à des vitesses d'écoulement différentes.

10. Procédé selon la revendication 9,
**caractérisé en ce qu'**un courant d'air est dirigé vers la surface du côté extérieur (8) de la pipette (2) sous la forme d'une lame d'air en forme d'éventail.

11. Utilisation d'un dispositif selon au moins l'une quelconque des revendications 1 à 8 dans un appareil d'analyse, un automate de laboratoire, un automate de coloration et/ou dans un automate d'incubation.

12. Utilisation d'un dispositif selon au moins l'une quelconque des revendications 1 à 8 dans un automate de coloration pour la coloration de coupes de tissus pathohistochimiques.
